# FASCICULE DE BREVET EUROPEEN

(11) **EP 3 784 481 B1**
(45) Date de publication et mention de la délivrance du brevet: **30.08.2023**
(21) Numéro de dépôt: 19723465.1
(22) Date de dépôt: 23.04.2019
(51) Int. Cl.: B29C 70/38, B29C 35/04, B29C 35/08

(54) **TETE D'APPLICATION DE FIBRES COMPRENANT PLUSIEURS ROULEAUX DE COMPACTAGE**
FASERAUFTRAGSKOPF MIT MEHREREN VERDICHTUNGSWALZEN
FIBRE APPLICATION HEAD COMPRISING MULTIPLE COMPACTING ROLLERS

(30) Priorité: 25.04.2018 FR 1800445
(43) Date de publication de la demande: 03.03.2021
(73) Titulaire: Coriolis Group, 56530 Quéven (FR)
(72) Inventeur: GAILLARD, Loïc, 56600 Lanester (FR); COUDURIER, Julien, 56100 Lorient (FR)
(86) Numéro de dépôt international: PCT/FR2019/000059
(87) Numéro de publication internationale: WO 2019/207215

(56) Documents cités:
- US-A- 4 285 752

## Description

La présente invention concerne une tête d'application de fibres pour réaliser des pièces en matériaux composites, et plus particulièrement une tête d'application de fibres comprenant plusieurs rouleaux de compactage. La présente invention concerne également un procédé de fabrication de pièces en matériaux composites au moyen d'une tête d'application correspondante.

Il est connu des machines d'application de fibre pour l'application au contact sur un outillage de drapage, tel qu'un moule mâle ou femelle, d'une bande large formée d'une ou plusieurs fibres plates continues, de type mèches, sèches ou imprégnées de résine thermodurcissable ou thermoplastique, notamment des fibres de carbone, constituées d'une multitude de fils ou filaments de carbone.

Ces machines d'application de fibres, appelées également machines de placement de fibre, comprennent classiquement une tête d'application, un système de déplacement apte à déplacer la tête d'application, et des moyens de stockage pour stocker les fibres. Les moyens de stockage de fibres peuvent être embarqués sur la tête, ou être disposés à distance de la tête. La tête comprend classiquement un système de compactage comprenant au moins rouleau d'application pour l'application d'une bande formée de plusieurs fibres disposées bord à bord sur une surface d'application d'un outillage de drapage, un système de guidage pour guider les fibres sous la forme d'une bande vers ledit rouleau d'application, et pour chaque fibre, des moyens de coupe pour couper une fibre, des moyens de réacheminement pour réacheminer la fibre jusqu'au rouleau d'application après une coupe effectuée par les moyens de coupe, et des moyens de blocage pour bloquer la fibre venant d'être coupée.

Le système de compactage comprend en outre au moins un vérin de compactage pour appliquer les fibres avec un effort de compactage.

Pour pouvoir appliquer de larges bandes de fibres, en particulier sur des surfaces d'application concaves ou convexes, il a été proposé notamment dans le document brevet EP2594389, d'utiliser un système de compactage comprenant des rouleaux de compactage indépendants. Chaque rouleau est utilisé pour appliquer une seule fibre, et est supporté par un système de fixation comprenant un système de déplacement en hauteur piloté par un moteur, et un vérin de compactage pour compenser les irrégularités de la surface d'application. Un tel système de compactage, ainsi que les moyens de coupe et les moyens de réacheminement de chaque fibre peuvent s'avérer compliquer à piloter en particulier pour atteindre des précisions de drapage dans le cas de coupe et de réacheminement de fibres à la volée.

Les rouleaux sont disposés en quinconce selon deux rangées parallèles pour pouvoir appliquer des bandes de fibres dans lesquelles les fibres sont tangentes latéralement. Un tel positionnement des rouleaux en deux rangées simplifie l'architecture de la tête, et notamment le montage des différents rouleaux sur la tête.

Dans le cas de drapage de fibres pré-imprégnées d'un polymère thermodurcissable, il peut être envisagé d'équiper la tête de moyens de chauffage disposés en amont des rouleaux de compactage, par exemple sous la forme de rampes de lampes infrarouges, pour chauffer la surface d'application ou les fibres préalablement draper et ainsi assurer l'adhésion des différents plis les uns aux autres lors du drapage.

Pour certains types de fibres, notamment des fibres sèches munies d'un liant, ou des fibres pré-imprégnées d'un polymère thermoplastique, il est nécessaire de chauffer la surface de drapage, ainsi que les fibres à draper, de préférence au niveau de zone de contact entre le rouleau et la surface. La tête proposée dans le document brevet cité rend difficile, voire impossible le drapage de telles fibres.

Le document US 4285752 décrit un système automatique de pose de bande pour déposer une bande sur une surface de travail, comprenant : une bobine d'alimentation en bande pour stocker la bande ; des moyens de coupe pour couper la bande ; des moyens de transport de bande pour transporter la bande de ladite bobine d'alimentation en bande auxdits moyens de coupe ; des moyens de dépôt de bande pouvant pivoter entre des première et seconde positions pour recevoir en continu la bande dans lesdites première et seconde positions depuis lesdits moyens de coupe ; et ladite bande étant reçue dans ladite première position des moyens de dépôt de bande pour un dépôt le long d'une première direction sur la surface de travail et ladite bande étant reçue dans ladite seconde position des moyens de dépôt de bande pour un dépôt le long d'une seconde direction sur la surface de travail.

Le but de la présente invention est de proposer une solution visant à pallier au moins l'un des inconvénients précités.

A cet effet, la présente invention propose une tête d'application de fibres pour la réalisation de pièces en matériau composite par application de bandes formées de plusieurs fibres continues disposées côte à côte, de préférence bord à bord, comprenant un système de compactage comprenant plusieurs rouleaux de compactage indépendants et des vérins de compactage pour appliquer les fibres avec effort de compactage et, pour chaque fibre, des moyens de coupe et des moyens de réacheminement, et de préférence des moyens de blocage, caractérisée en ce que
- pour chaque fibre, la tête comprend un module fonctionnel comprenant les moyens de coupe et les moyens de réacheminement, chaque module fonctionnel est monté mobile en translation selon une direction de compactage sur un élément support de la tête,
- chaque rouleau de compactage est monté sur un ou plusieurs modules fonctionnels adjacents ;
- un vérin de compactage est associé au(x) module(s) fonctionnel(s) associé(s) à un rouleau de compactage pour le déplacement en translation du ou des modules fonctionnels,
- les rouleaux de compactage sont disposés en une seule rangée, côte à côte, sans contact entre eux, les axes de rotation des rouleaux de compactage étant disposés selon un même plan, appelé plan de compactage, parallèle à la direction de compactage,
- ladite tête comprenant au moins un premier module fonctionnel, appelé également module fonctionnel aval, et au moins un second module fonctionnel, appelé également module fonctionnel amont, disposés côte à côte en alternance, chaque premier module fonctionnel comprenant des moyens de guidage aptes à guider une première fibre en direction d'un rouleau de compactage selon un premier plan de guidage, et chaque second module fonctionnel comprenant des moyens de guidage aptes à guider une deuxième fibre en direction d'un rouleau de compactage selon un second plan de guidage, différent du premier plan de guidage, de manière à former au niveau des rouleaux de compactage une bande de fibres formée de première(s) et deuxième(s) fibres disposées en alternance bord à bord. Cette disposition en une seule rangée permet d'utiliser des moyens de chauffage simples et efficaces, pouvant chauffer au niveau de la ligne de contact entre la surface d'application et chaque rouleau de compactage. De manière surprenante, les inventeurs ont constaté qu'un compactage partiel des fibres ou de certaines fibres sur uniquement une partie de leur largeur permettait d'obtenir une qualité de drapage satisfaisante, et qu'il est donc possible d'utiliser, dans le cas d'une tête comprenant un rouleau de compactage par fibre, un rouleau de compactage de largueur inférieure à la largeur de la fibre. Les vérins de compactage sont aptes à déplacer les modules fonctionnels entre une première position extrême, dite position haute, et une deuxième position extrême dite position basse, les axes de rotation des rouleaux en position haute extrême ou en position basse extrême sont sensiblement alignés.

Les rouleaux de compactage sont alignés en étant écartés les uns des autres, de sorte qu'ils puissent se déplacer dans le plan de compactage indépendamment les uns des autres.

La tête selon l'invention comprend au minimum deux rouleaux de compactage, chaque rouleau de compactage étant associé à un module fonctionnel ou à deux modules fonctionnels.

L'utilisation de premier(s) et second(s) modules fonctionnels guidant les fibres selon un premier plan de guidage et un second plan de guidage permet de draper des bandes de fibres dans lesquelles les fibres sont disposées bord à bord, les fibres étant sensiblement jointives par leurs bords longitudinaux.

La tête peut comprendre qu'un seul premier module fonctionnel et un seul second module fonctionnel, la tête étant alors apte à draper une bande de fibres formée d'une première fibre et d'une deuxième fibre disposées bord à bord. Lorsque la tête comprend plusieurs premiers modules fonctionnels et seconds modules fonctionnels, les premiers modules fonctionnels et seconds modules fonctionnels sont disposés côte à côte en alternance, la tête étant alors apte à draper une bande de fibre formée de premières fibres et de deuxièmes fibres disposées en alternance bord à bord.

Selon un mode de réalisation, chaque rouleau de compactage est monté sur un ou plusieurs modules fonctionnels entre deux flasques, un jeu étant de préférence prévu entre les flasques de deux rouleaux de compactage adjacents. Selon un autre mode de réalisation, chaque rouleau de compactage comprend deux galets de compactage, montés rotatifs en porte à faux de part et d'autre d'un même flasque ou support.

Selon un mode de réalisation, la tête comprend un rouleau de compactage par module fonctionnel.

Selon un mode de réalisation, la tête comprend des premiers modules fonctionnels, appelés également modules fonctionnels aval, et des seconds modules fonctionnels, également appelés modules fonctionnels amont, disposés en alternance, chaque premier module fonctionnel comprenant des moyens de guidage aptes à guider une première fibre en direction du rouleau de compactage associé audit premier module fonctionnel selon un premier plan de guidage formant un premier angle non nul avec le plan de compactage des axes de rotation des rouleaux de compactage, chaque second module fonctionnel comprenant des moyens de guidage aptes à guider une deuxième fibre en direction du rouleau de compactage associé audit second module fonctionnel selon un second plan de guidage formant un deuxième angle non nul avec le plan de compactage des axes de rotation des rouleaux de compactage, ledit deuxième angle étant supérieur au premier angle, lesdits plans de guidage étant disposés du même côté du plan de compactage. Cette architecture particulière de tête avec deux plans de guidage disposés du même côté par rapport au plan de compactage assure un guidage optimal des fibres au plus près des rouleaux de compactage, et un angle d'arrivée des fibres sur les rouleaux de compactage permettant un chauffage optimal des fibres par des moyens de chauffage disposés en amont des rouleaux de compactage.

Selon un mode de réalisation, la tête comprend en outre des moyens de chauffage, disposés en amont des rouleaux de compactage par rapport à la direction d'avancement de la tête lors du drapage comprenant un système de chauffage indépendant associé à chaque rouleau de compactage, ledit système de chauffage étant apte à se déplacer avec le ou les modules fonctionnels associés audit un rouleau de compactage, lorsque le ou les modules fonctionnels se déplacent selon la direction de compactage. Un système de chauffage est associé à chaque rouleau de compactage et se déplace dans la direction de compactage avec le ou les modules fonctionnels associés, garantissant ainsi un chauffage optimal en cours de drapage.

Le système de chauffage est réglé de sorte qu'il soit apte à émettre un rayonnement thermique en direction de surface de drapage et/ou une ou plusieurs fibres préalablement appliquées, de préférence en direction de la zone de pincement ou zone de contact entre le rouleau de compactage et la surface d'application, pour chauffer la fibre disposée sur le rouleau, avant son compactage par ce dernier, ainsi que la surface d'application et/ou une ou plusieurs fibres préalablement appliquées.

Lors du déplacement du module fonctionnel dans la direction de compactage, la distance entre le système de chauffage et la surface d'application, la distance entre le système de chauffage et le rouleau de compactage, et l'orientation du rayonnement par rapport à la surface d'application et le rouleau de compactage varient faiblement, de préférence restent sensiblement constantes.

Selon un mode de réalisation, caractérisée en ce que le système de chauffage est apte à émettre un rayonnement thermique en direction de la zone de pincement ou zone de contact entre le rouleau de compactage et la surface d'application, pour chauffer chaque fibre disposée sur le rouleau de compactage, avant son compactage par ce dernier, ainsi que la surface d'application et/ou une ou plusieurs fibres préalablement appliquées.

Selon un mode de réalisation, chaque système de chauffage comprend une ou plusieurs torches à air chaud, un système de chauffage de type laser, ou un système de chauffage de type lampe flash.

Selon un mode de réalisation, le système de chauffage est monté directement sur le ou les modules associés à un même rouleau de compactage.

Selon un autre mode de réalisation, chaque système de chauffage est monté mobile en translation dans la direction de compactage sur l'élément support, en amont du ou des modules fonctionnels associés à un même rouleau de compactage, et est relié mécaniquement par au moins un bras rigide au(x)dit(s) module(s) fonctionnel(s). Dans ce mode de réalisation, le déplacement du système de chauffage est assuré par le vérin de compactage via le bras de liaison. Selon une variante de réalisation, le système de chauffage est déplacé par son propre système d'actionnement, par exemple un vérin, qui fonctionne en synchronisme avec le vérin de compactage.

Selon un autre mode de réalisation, chaque système de chauffage est monté pivotant sur l'élément support, en amont du ou des modules fonctionnels associés à un même rouleau de compactage, autour d'un axe parallèle aux axes de rotation des rouleaux de compactage et est relié mécaniquement par au moins une biellette au(x)dit(s) module(s) fonctionnel(s), la biellette étant montée pivotante par ses extrémités au système de chauffage et au(x)dit(s) module(s) fonctionnel(s).

Selon un mode de réalisation, chaque élément support est monté mobile en translation sur un châssis de la tête dans une direction perpendiculaire à la direction de compactage, de sorte que chaque élément support puisse être déplacé depuis une position de drapage, dans laquelle les modules fonctionnels sont côte à côte et dans laquelle ladite tête est apte à draper une bande de fibres formée de fibres disposées bord à bord, vers une position de maintenance dans laquelle le ou les modules fonctionnels portés par ledit élément support sont écartés des autres éléments support et accessibles pour effectuer les opérations de maintenance. Ce montage des modules fonctionnels sur des éléments support mobiles en translation sur un châssis permet un accès simple aux modules fonctionnels pour des opérations de maintenance, notamment des opérations de maintenance sur les moyens de coupe et/ou les moyens de réacheminement, ainsi que le positionnement de la fibre dans chaque module fonctionnel.

Selon un mode de réalisation, chaque élément support porte deux modules fonctionnels adjacents, chaque module fonctionnel étant de préférence accessible depuis une face latérale de l'élément support.

Selon un mode de réalisation, au moins un élément support est apte à être déplacé par un moteur d'entrainement, ledit élément support étant par exemple équipé d'un moteur coopérant avec une crémaillère solidaire du châssis, lesdits éléments support étant équipés de moyens d'assemblage pour assembler et désassembler deux à deux des éléments support adjacents. De préférence, chaque élément support extérieur est apte à être déplacé par un moteur d'entrainement.

Selon un mode de réalisation, chaque élément support est apte à porter une bobine de fibres ou cassette de fibres associée à chaque module fonctionnel porté par ledit élément support. Selon un mode de réalisation, l'élément support comprend un mandrin pour la réception de chaque bobine ou cassette de fibres, le blocage axial de bobines ou cassettes sur leurs mandrins respectifs étant effectué par un élément support adjacent lorsque les éléments support sont en position de drapage.

Selon un mode de réalisation, la tête d'application comprend des moyens de limitation, de préférence mécaniques, aptes à limiter les courses relatives de deux modules fonctionnels adjacents dans la direction de compactage, de manière à permettre une disposition des moyens de coupe des modules fonctionnels et un guidage des fibres au plus près des rouleaux de compactage, et ainsi garantir une bonne qualité de drapage, tout en évitant des collisions, notamment entre lesdits moyens de coupe. Lesdits moyens de limitation comprennent par exemple, pour chaque paire de modules adjacents associés à des rouleaux de compactage différents, un doigt solidaire de l'un des deux modules fonctionnels, et positionné entre deux butées de l'autre module fonctionnel, les deux butées étant espacées l'une de l'autre dans la direction de compactage.

La présente invention a également pour objet un procédé de fabrication d'une pièce en matériau composite comprenant l'application de fibres continues sur une surface d'application, caractérisé en ce que l'application de fibres est réalisée au moyen d'une tête d'application de fibres tel que décrit précédemment, par déplacement relatif de la tête d'application par rapport à la surface de drapage selon des trajectoires de dépose. Selon un mode de réalisation, le procédé comprend le drapage de bandes de fibres dans laquelle les fibres sont disposées sensiblement bord à bord, chaque fibre lors du drapage étant compactée partiellement par un rouleau de compactage de largeur inférieure à la largeur de la fibre.

L'invention sera mieux comprise, et d'autres buts, détails, caractéristiques et avantages apparaîtront plus clairement au cours de la description explicative détaillée qui va suivre d'un mode de réalisation particulier actuellement préféré de l'invention, en référence aux dessins schématiques annexés, sur lesquels :
- les figures 1 et 2 sont deux vues schématiques en perspective d'une tête d'application de fibres selon un mode de réalisation l'invention ;
- la figure 3 est une vue de côté de la tête de la figure 1 ;
- la figure 4 est une vue schématique en perspective d'un élément support de la tête de la figure 1, ledit élément support portant deux modules fonctionnels et les cassettes de fibre associées ;
- les figures 5 et 6 sont des vues de côté de l'élément support de la figure 4, illustrant respectivement un module fonctionnel aval et un module fonctionnel amont, lesdits modules fonctionnels étant en position haute extrême ;
- les figures 7 et 8 sont des vues analogues aux figures 5 et 6, le module fonctionnel aval étant en position basse et le module fonctionnel amont étant en position haute ;
- les figures 9 et 10 sont des vues de côté agrandies respectivement des modules fonctionnels aval et amont, illustrant de manière schématique les moyens de coupe, les moyens de réacheminement et les moyens de blocage des modules fonctionnels ;
- la figure 11 est une vue illustrant la position relative des modules fonctionnels des figures 9 et 10 ;
- les figures 12, 13 et 14 sont des vues analogues à celles respectivement des figures 4, 5 et 7, sur lesquelles les systèmes de chauffage de la tête ont été ajoutés ;
- les figures 15 et 16 sont respectivement des vues en perspective et de côté de la tête de la figure 1, les éléments support étant dans une position de maintenance ;
- les figures 17 et 18 sont des vues analogues à celle de la figure 16 illustrant d'autres positons de maintenance des éléments support ; et,
- la figure 19 est une vue de côté d'une tête selon une variante de réalisation, et la figure 20 est une vue agrandie du détail D de la figure 19.

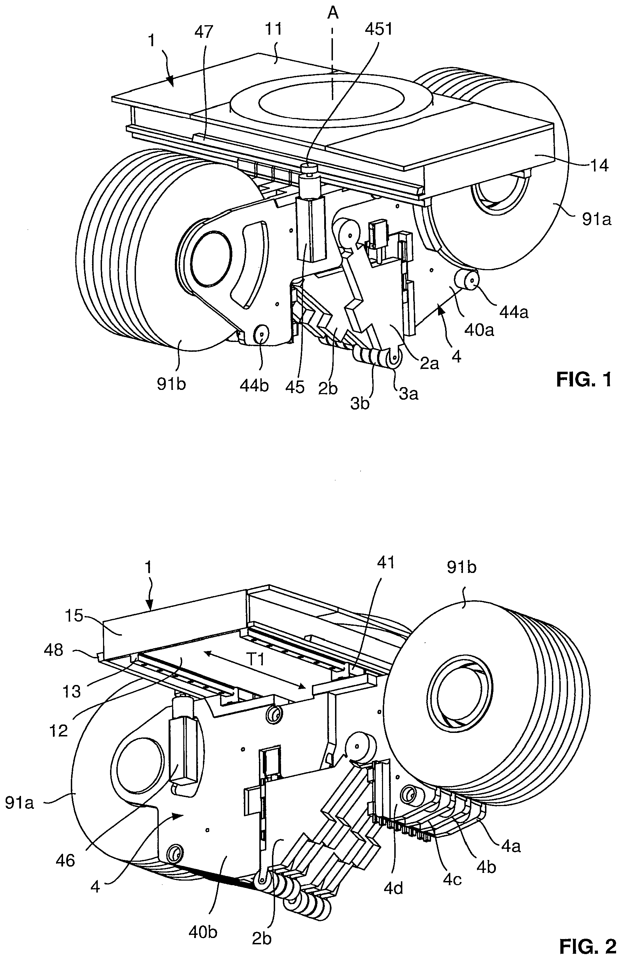

Les figures 1 à 3 illustrent une tête d'application de fibres selon l'invention pour le drapage d'une bande formée de plusieurs fibres continues.

La tête selon l'invention est destinée à être assemblée à un système de déplacement pour effectuer les opérations de drapage de fibres, les fibres étant dans le présent mode de réalisation conditionnées sous forme de cassettes, et les cassettes sont embarquées sur la tête.

La tête comprend une structure support ou châssis 1 présentant une face principale supérieure 11 munie de moyens d'assemblage (non représentés) pour l'assemblage de la tête selon un axe assemblage A, à un système de déplacement de la tête, par exemple le poignet d'un robot polyarticulé ou d'un système de déplacement cartésien de type portique.

La tête porte une pluralité de modules fonctionnels 2a, 2b disposés côte à côte. Chaque module fonctionnel est associé à une cassette de fibre 91a, 91b et comprend des moyens de coupe, des moyens de réacheminement et des moyens de blocage. Chaque module porte un rouleau de compactage 3a, 3b.

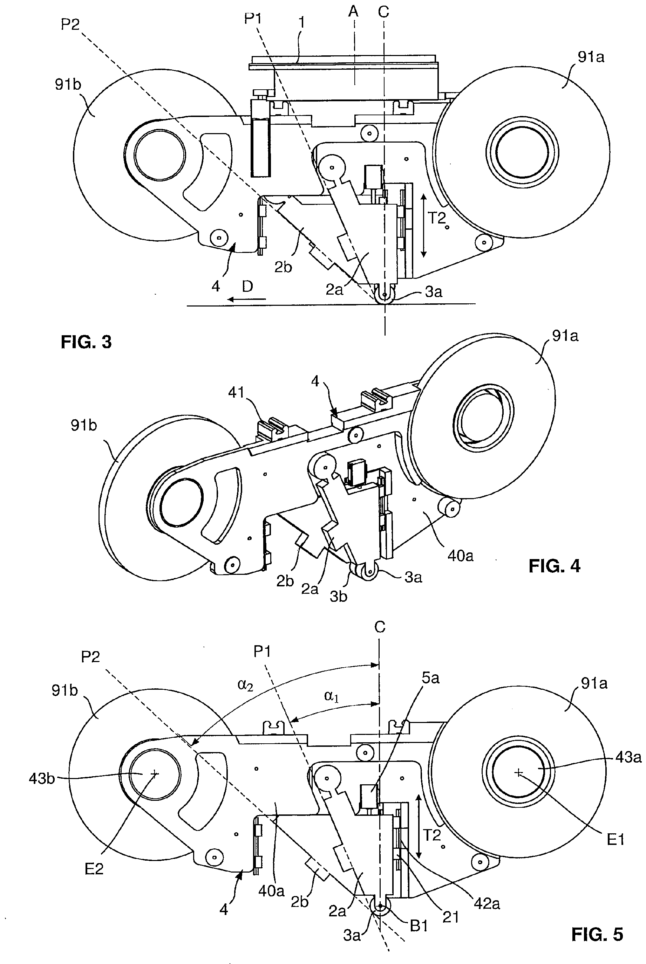

La tête comprend deux types de module fonctionnel, des premiers modules fonctionnels 2a, appelés également modules fonctionnels amont, associés à des cassettes de fibres amont 91a, disposées en amont des modules fonctionnels par rapport à la direction d'avancement D (Fig. 3) de la tête lors du drapage, et des seconds modules fonctionnels 2b, appelés également modules fonctionnels aval, associés à des cassettes de fibres aval 91b, disposées en aval des modules fonctionnels par rapport à la direction d'avancement D. Les modules fonctionnels sont disposés selon une rangée, la rangée comprenant une alternance de modules fonctionnels amont 2a et de modules fonctionnels aval 2b.

Le montage des modules fonctionnels sur le châssis est réalisé au moyen d'éléments support 4, chaque élément support, formé d'une ou plusieurs pièces, portant un module fonctionnel aval 2a et un module fonctionnel amont 2b.

Dans le présent mode de réalisation, la tête est prévue pour le drapage d'une bande de huit fibres, la tête comprend quatre éléments support 4 identiques, portant chacun deux modules fonctionnels, les éléments support étant référencés individuellement sous les références 4a, 4b, 4c et 4d sur les figures.

Chaque élément support 4 est monté mobile en translation sur la face principale inférieure 12 du châssis 1, selon une direction T1, perpendiculaire à l'axe d'assemblage A. Pour ce montage en translation, chaque élément support 4 est équipé sur un bord supérieur de deux chariots 41 pour le montage de l'élément support sur deux rails 13 correspondants, montés sur la face inférieure 12 du châssis, s'étendant d'une première extrémité 14 à une deuxième extrémité 15 du châssis.

En référence aux figures 4 à 6, l'élément support 4 porte un module fonctionnel aval 2a, accessible depuis une première face latérale 40a de l'élément support, et un module fonctionnel amont 2b, accessible depuis une deuxième face latérale 40b.

Le module fonctionnel aval 2a est monté sur l'élément support, mobile en translation dans une direction T2, qui est parallèle à l'axe d'assemblage A. Pour ce montage, le module fonctionnel aval est équipé de chariots 21 montés coulissants sur un rail 42a solidaire de l'élément support. Le module est assemblé en partie supérieure à l'extrémité de la tige d'un vérin de compactage 5a, ledit vérin étant assemblé par son corps à l'élément support. Le module fonctionnel aval porte en partie inférieure un rouleau de compactage 3a. Le rouleau de compactage est monté entre deux flasques 22a du module fonctionnel aval, mobile en rotation autour d'un axe de rotation B1, qui est perpendiculaire à la direction T2. Lors du déplacement du module fonctionnel en translation dans la direction T2, l'axe de rotation B1 du rouleau de compactage se déplace dans un plan C, appelé plan de compactage, qui est parallèle à la direction T2. Le module fonctionnel aval comprend des moyens de guidage d'une fibre permettant de guider la fibre entrant dans le module en direction du rouleau de compactage selon un plan P1, ledit plan formant un angle α₁ avec le plan C.

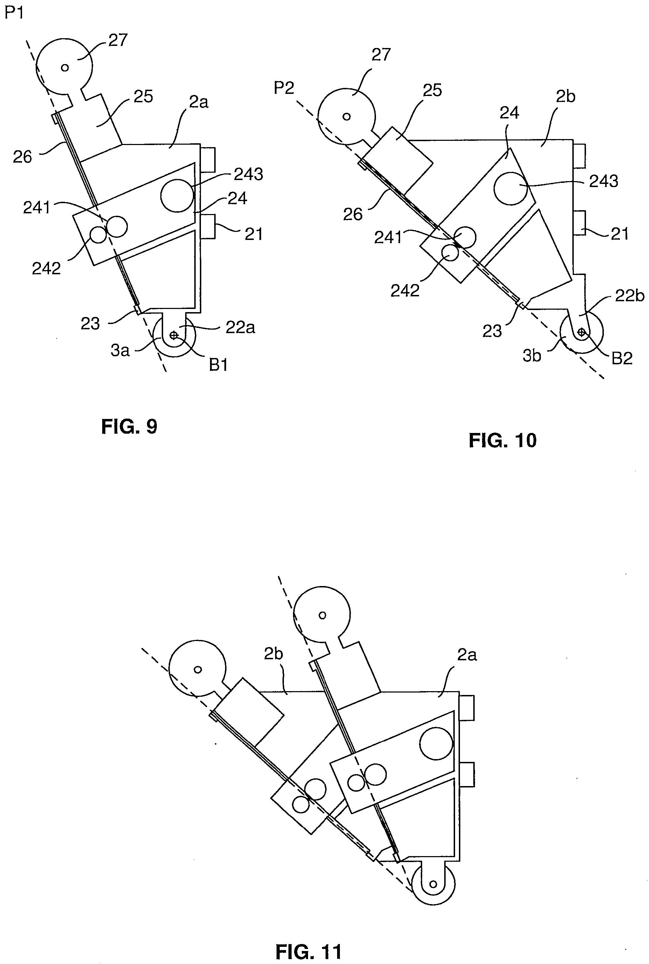

En référence à la figure 9, le module fonctionnel aval comprend des moyens de coupe 23 pour couper la fibre, des moyens de réacheminement 24, pour réacheminer la fibre jusqu'au rouleau de compactage après une opération de coupe, et des moyens de blocage pour bloquer la fibre venant d'être coupée.

Les moyens de coupe, connus en soi, comprennent au moins une lame apte à être manoeuvrée par un vérin de coupe entre une position de repos et une position active pour couper une fibre. Les moyens de blocage, connus en soi, comprennent par exemple un plot de blocage apte à être manoeuvré par un vérin de blocage entre une position de repos et une position active pour bloquer la fibre. A titre d'exemple, le module fonctionnel aval comprend des moyens de coupe et des moyens de blocage, tels que décrits dans le document brevet EP2134532, WO2017/072421 ou FR17/01245 et FR17/01247.

Les moyens de réacheminement comprennent un galet d'entrainement 241 motorisé et un contre-galet 242 actionné par un vérin de réacheminement entre une position de repos et une position active. Le galet d'entrainement 241 est entrainé en rotation par un moteur 243 embarqué dans le module fonctionnel aval, par exemple par l'intermédiaire d'un système de courroie ou d'engrenage. En position active, le contre-galet est apte à plaquer la fibre contre le galet d'entrainement pour le réacheminement de cette dernière.

Les moyens de guidage 26 permettent de guider la fibre entre les moyens de blocage, les moyens de réacheminement et les moyens de coupe, et en direction du rouleau de compactage, et comprennent par exemple un canal formé à l'interface d'assemblage de deux plaques. La fibre déroulée de la cassette 91a associée au module est guidée en entrée des moyens de guidage 26 par une poulie 27 qui est montée mobile en rotation entre deux flasques solidaires du module fonctionnel. L'élément support porte en outre sur sa première face latérale un mandrin 43a, motorisé ou non, pour recevoir la cassette, de sorte que la cassette soit mobile en rotation autour d'un axe de rotation E1. La fibre déroulée de la cassette, est acheminée jusqu'à la poulie 27 du module au moyen d'un ensemble de poulies (non représentées), montées rotatives sur la face latérale 40a. Un système de contrôle de la tension peut également être prévu sur le chemin de fibre entre la cassette et la poulie 27 pour reprendre le mou et/ou contrôler la rotation du mandrin.

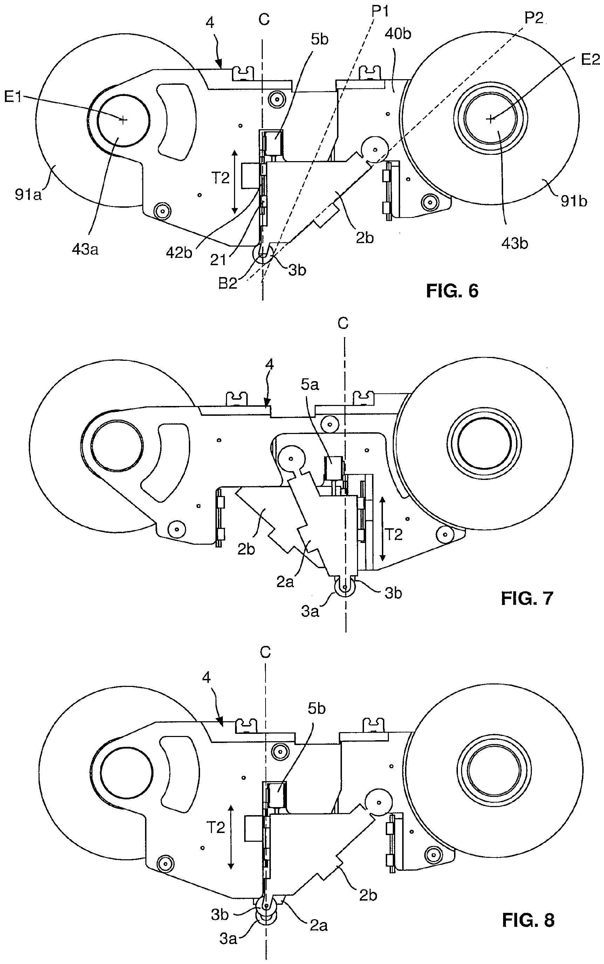

De manière analogue, en référence aux figures 6, 8 et 10, le module fonctionnel amont 2b est monté mobile en translation dans la direction T2, le module fonctionnel amont étant équipé de chariots 21 montés coulissants sur un rail 42b solidaire de l'élément support. Le module est assemblé en partie supérieure à l'extrémité de la tige d'un vérin de compactage 5b, ledit vérin étant assemblé par son corps à l'élément support. Le module fonctionnel amont porte en partie inférieure un rouleau de compactage 3b. Le rouleau de compactage 3b est monté entre deux flasques 22b du module fonctionnel aval, mobile en rotation autour d'un axe de rotation B2, qui est perpendiculaire à la direction T2. Lors du déplacement du module en translation dans la direction T2, l'axe de rotation B2 du rouleau de compactage 3b de ce module se déplace dans le même plan C que l'axe de rotation B1 du rouleau de compactage 3a du module fonctionnel aval.

Le module fonctionnel aval comprend des moyens de guidage 26 d'une fibre permettant de guider la fibre entrant dans le module en direction du rouleau de compactage selon un plan P2, les plans P1 et P2 étant disposés du même côté du plan C, ledit plan P2 formant un angle α₂ avec le plan C qui est supérieur à l'angle α₁, le plan P1 étant disposé en amont un plan P2 par rapport à la direction d'avancement de la tête lors du drapage. Le module fonctionnel aval comprend des moyens de coupe 23, des moyens de réacheminement 24, et des moyens de blocage, lesdits moyens étant identiques à ceux du module fonctionnel aval.

Le module fonctionnel amont présente une forme différente de celle du module fonctionnel aval, de manière à décaler le plan de guidage P2 par rapport au plan de guidage P1. Tel qu'illustré sur la figure 11, les moyens de guidage, les moyens de coupe, de réacheminement et de blocage du module fonctionnel amont sont décalés par rapport à ceux du module fonctionnel aval. Pour limiter le porte-à-faux, le rail 42b sur lequel est monté le module fonctionnel amont est décalé par rapport au rail 42a sur lequel est monté le module fonctionnel aval. Le module fonctionnel amont porte également une poulie 27 montée mobile en rotation entre deux flasques, pour guider la fibre déroulée de la cassette 91b en entrée du module fonctionnel.

L'élément support porte en outre sur sa première face latérale 40a un mandrin 43b, motorisé ou non, pour recevoir la cassette 90b, de sorte que la cassette soit mobile en rotation autour d'un axe de rotation E2, ainsi que, comme précédemment, un ensemble de poulies de guidage et un éventuel système de contrôle de tension.

Les quatre éléments support sont montés sur le châssis de sorte que les axes de rotation des rouleaux soient tous disposés sensiblement selon le même plan C.

Les rouleaux de compactage sont tous identiques et sont de préférence aptes à s'adapter à la surface d'application, notamment à des surfaces d'application convexes et/ou concaves. Chaque rouleau de compactage est de préférence un rouleau de compactage en un matériau dit souple, qui est déformable élastiquement, tel qu'un élastomère. Le rouleau comprend un cylindre en matériau souple, monté fixe en rotation sur un axe rigide, par exemple métallique par lequel le rouleau est monté libre en rotation entre deux flasques.

Chaque vérin de compactage 5a, 5b est apte à déplacer son module fonctionnel associé entre une position haute extrême et une position basse extrême. Sur la figure 4, les deux modules sont en position haute extrême. Sur les figures 7 et 8, le module fonctionnel aval est en position basse extrême tandis que le module fonctionnel amont est en position haute extrême.

Chaque vérin de compactage est par exemple un vérin à double effet, de préférence pneumatique, avec deux chambres alimentées en air comprimé, dont une première chambre inférieure entre le piston et le module fonctionnel et une deuxième chambre supérieure du côté opposé du piston.

Pour le drapage d'une fibre avec un module fonctionnel, le module est sollicité élastiquement vers sa position extrême basse par son vérin de compactage. La tête est amenée en contact avec la surface de drapage, le rouleau en appui avec la surface de drapage. L'effort de compactage pour le drapage peut être régulé en adaptant la pression d'alimentation en air comprimé dans la chambre supérieure du vérin. Lors du drapage, le module fonctionnel peut se déplacer entre sa position basse extrême et sa position haute extrême pour s'adapter à la surface de drapage. Lorsque le module n'est pas utilisé pour draper une fibre, celui-ci est maintenu en position haute extrême en alimentant la chambre inférieure en air comprimé.

A titre d'exemple, sur les figures 1 à 3, les quatre modules fonctionnels des deux éléments support 4a et 4b sont en position basse extrême pour le drapage d'une bande de quatre fibres, les quatre autres modules fonctionnels des deux autres éléments support 4c et 4d étant maintenus en position haute extrême. Lors du drapage, les modules fonctionnels des éléments support sont aptes à se déplacer entre leur position haute extrême et leur position basse extrême indépendamment les uns des autres, en fonction des variations de géométrie de la surface d'application.

Les moyens de guidage, ainsi que les moyens de coupe, au moins au niveau de la ou des lames du système de coupe, présentent nécessairement une dimension transversale supérieure à la largeur de la fibre. Aussi, pour permettre le drapage de bandes de fibres dans lesquelles les fibres sont sensiblement bord à bord, les moyens de guidage et les moyens de coupe des modules fonctionnels amont et ceux des modules fonctionnels aval sont disposés de manière à permettre le déplacement desdits modules fonctionnels indépendamment les uns des autres entre leur position basse extrême et leur position haute extrême. Dans le cas d'une tête prévue pour le drapage de bande de fibres bord à bord, la tête comprend des rouleaux de compactage de largeur inférieure à celle des fibres, la différence de largeur correspondant à l'encombrement nécessaire pour le montage en rotation des rouleaux de compactage entre deux flasques. L'écartement entre les faces latérales de deux rouleaux de compactage adjacents correspond globalement aux épaisseurs des deux flasques adjacents, additionnées d'un jeu inter-flasques.

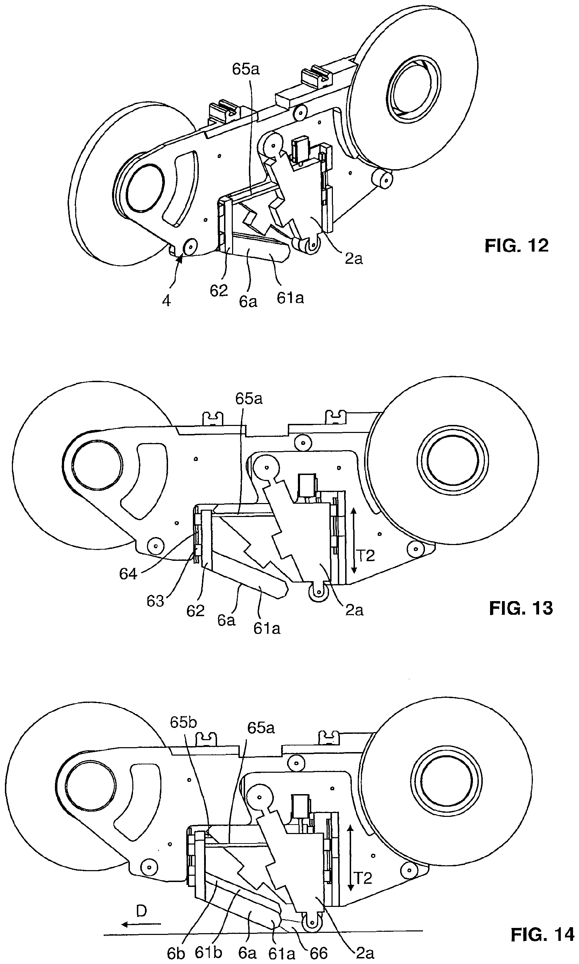

La tête comprend un système de chauffage associé à chaque module fonctionnel pour chauffer au moins la surface d'application en amont du rouleau de compactage, de préférence la surface d'application en amont du rouleau, ainsi que la fibre à draper en sortie des moyens de guidage. Dans un souci de clarté des figures, les systèmes de chauffage sont illustrés uniquement sur les figures 12 à 14. Chaque élément support 4 porte un système de chauffage 6a associé au module fonctionnel aval 2a et un système de chauffage 6b associé au module fonctionnel amont 2b. Les systèmes de chauffage sont montés sur l'élément support en amont des modules fonctionnels par rapport à la direction d'avancement de la tête.

Dans le présent mode de réalisation, chaque système de chauffage comprend une torche à air chaud 61a, 61b, de préférence électrique, à air comprimé ou associé à une turbine, apte à émettre un flux d'air chaud. Chaque torche est montée sur un support 62 monté mobile en translation dans la direction T2, via des chariots 63 solidaires du support coulissant sur un rail 64 solidaire de l'élément support. Le système de chauffage 6a est lié au module fonctionnel aval par un bras de liaison 65a, de sorte que la torche à air chaud se déplace en translation avec le module fonctionnel aval lors du drapage. De manière analogue le système de chauffage 6b est relié par un bras 65b au module fonctionnel amont 2b.

Le montage de la torche est effectué de sorte que le flux d'air chaud 66 soit dirigé en direction de la zone de pincement entre le rouleau et la surface d'application. La liaison de la torche à air chaud à son module fonctionnel garantit un chauffage optimal pour le drapage de la fibre.

Le montage des systèmes de chauffage sur des rails permet de limiter le porte-à-faux des modules fonctionnels. Toutefois, selon un mode de réalisation, chaque système de chauffage est monté directement sur un module fonctionnel.

Selon une variante de réalisation, le système de chauffage comprend pour chaque module fonctionnel deux torches à air, par exemple superposées.

Le système de chauffage peut comprendre en outre plus une ou plusieurs lampes infrarouges montées sur l'élément support, en amont de la ou des torches, pour chauffer la surface de drapage.

Selon d'autres modes de réalisation, le système de chauffage à torche à air précité est remplacé par un système de chauffage de type laser ou un système de chauffage de type lampe flash, tel que décrit dans le document brevet WO2014/029969 ou WO2017/134453. Dans le cas d'un chauffage de type laser ou lampe flash, le rayonnement est dirigé obliquement vers la zone de pincement ou zone de contact entre le rouleau d'application et la surface d'application, pour chauffer la fibre disposée sur le rouleau, avant son compactage par ce dernier, ainsi que la surface d'application et/ou une ou plusieurs fibres préalablement appliquées.

Les fibres sont de préférence des fibres continues plates, de type mèches, pré-imprégnées d'une résine thermodurcissable ou d'une résine thermoplastiques, ou des fibres sèches munies d'un liant. Le liant est sous forme de poudre et/ou d'un ou plusieurs voiles, de préférence de type thermoplastique.

La tête selon l'invention s'avère particulièrement avantageuse pour le drapade de fibres sèches munies de liant ou de fibres pré-imprégnées de résine thermoplastique.

La tête peut être adaptée pour le drapage de fibres de différentes largeurs, mais s'avère particulièrement avantageuse pour le drapage de fibres de largeur d'au moins 12,7mm (un demi pouce), par exemple de 25,4mm (un pouce), 38,1mm (un pouce et demi), ou 50,8mm (deux pouces). Pour une largeur allant jusqu'à 12,7mm (un demi pouce), les fibres peuvent être enroulées en bobines trancannées, à spires hélicoïdales. Au-delà de 12,7mm (un demi-pouce) de largeur, la fibre est enroulée en bobine ou cassette sans trancannage.

En référence aux figures 1 et 2, les éléments supports sont disposés côte à côte dans une position de drapage, dans laquelle la tête est apte à draper une bande de fibres formées de fibres disposées bord à bord, et dans laquelle les éléments support sont centrés par rapport à l'axe A. Les éléments support sont équipés de moyens d'assemblage ou verrouillage 44a, 44b, par exemple pneumatiques, permettant d'assembler et de désassembler deux éléments adjacents. Les deux éléments support 4a et 4d extérieurs sont chacun équipés d'un moteur 45, 46 dont l'arbre est muni d'un pignon 451 engrenant avec une crémaillère 47, 48 montée sur l'élément support pour permettre le déplacement desdits modules fonctionnels 4a, 4b en translation dans la direction T1.

Dans la position de drapage des éléments support illustrée aux figures 1 et 2, les éléments support sont assemblés les uns aux autres. Le maintien en position de drapage est assuré par les moteurs 45, 46. En variante, des moyens de blocage en translation peuvent être prévus.

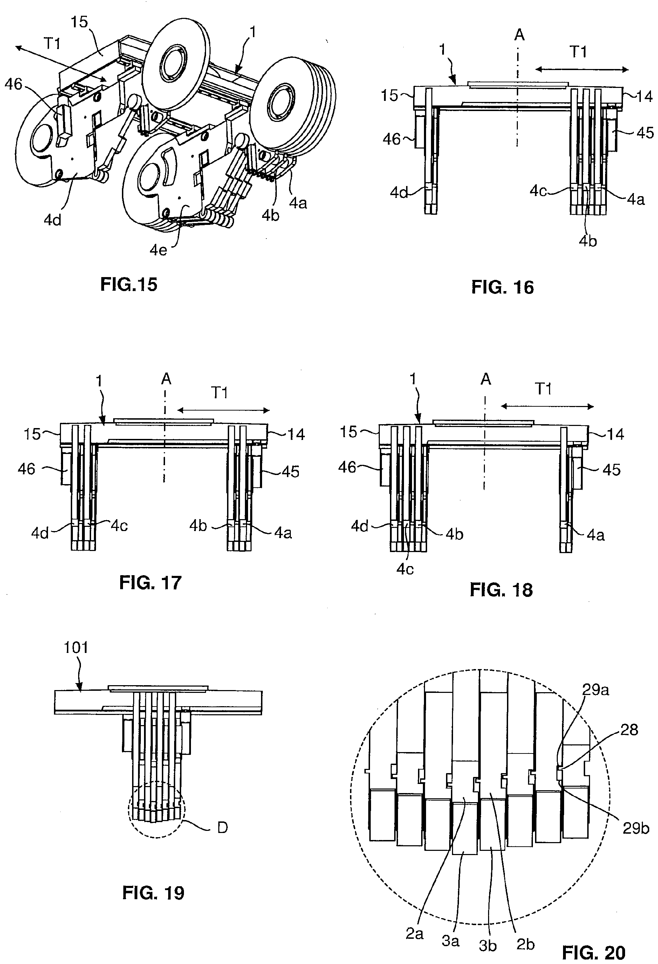

Les figures 15 à 18 illustrent les différentes positions des éléments support pour effectuer des opérations de maintenance sur les modules fonctionnels amont et aval des éléments support, ainsi que pour charger de nouvelles cassettes de fibre.

En position de drapage, la première face principale 40a de l'élément support 4a extérieur disposé du côté de la première extrémité 14 est accessible, par exemple pour accéder à son module fonctionnel amont pour effectuer des opérations de maintenance sur ses moyens de coupe, de réacheminement et/ou de blocage, sur son rouleau de compactage, pour effectuer un changement de cassette de fibre, et pour effectuer le passage de fibre de la cassette jusqu'au rouleau de compactage. La deuxième face principale 40b de l'élément support extérieur 4d est également accessible pour accéder à son module fonctionnel amont et à sa cassette associée pour effectuer les opérations précitées.

Partant de cette position de drapage, l'élément support 4d extérieur est désassemblé de l'élément support 4c adjacent, en pilotant leurs moyens de verrouillage 44a, 44b, et son moteur 46 est piloté pour le déplacer en direction de la deuxième extrémité 15, tel qu'illustré aux figures 15 et 16. Le moteur 45 de l'élément support 4a extérieur est piloté pour le déplacer en direction de la première extrémité 14, avec l'élément support 4e assemblé à l'élément support 4b, lui-même assemblé à l'élément support 4a extérieur motorisé.

Dans cette position de maintenance, l'élément support 4d extérieur est écarté de l'élément support 4c, de sorte qu'un opérateur puisse accéder aux faces principales en vis-à-vis de ces éléments support, et effectuer des opérations de maintenance sur les modules fonctionnels et les cassettes qui sont accessibles depuis lesdites faces.

Depuis cette position de maintenance des figures 15 et 16, les moteurs 45, 46 peuvent être pilotés pour ramener les éléments support dans la position de drapage de la figure 1, puis après assemblage de l'élément support 4c à l'élément support 4d, et désassemblage de l'élément support 4c de l'élément support 4b, les moteurs sont pilotés pour ramener les éléments support extérieurs vers les extrémités 14, 15 tel qu'illustré à la figure 17. Dans cette position de maintenance, un opérateur peut effectuer des opérations de maintenance sur les modules fonctionnels et cassettes associées accessibles depuis les faces principales en vis-à-vis des éléments fonctionnels 4c et 4b centraux.

Les moteurs 45, 46 peuvent par la suite être pilotés pour ramener les éléments support dans la position de drapage, puis après assemblage de l'élément support 4b à l'élément support 4c, et désassemblage de l'élément support 4b de l'élément support 4a, les moteurs sont pilotés pour ramener les éléments support extérieurs vers les extrémités 14, 15 tel qu'illustré à la figure 18. Dans cette position de maintenance, un opérateur peut effectuer des opérations de maintenance sur les modules fonctionnels et cassette associées des faces principales en vis-à-vis des éléments fonctionnels 4b et 4a.

Les figures 16, 17 et 18 illustrent les trois positions de maintenance des éléments support de la tête qui permettent d'effectuer des opérations de maintenance sur tous les modules fonctionnels et toutes les cassettes.

L'utilisation de deux moteurs, notamment pour revenir en position de drapage entre chaque position de maintenance, permet d'effectuer les changements de position plus rapidement. En variante, le passage d'une position de maintenance à l'autre est effectué en utilisant qu'un seul moteur. Selon un autre mode de réalisation, seul l'un des deux éléments support est motorisé, et est utilisé pour effectuer les différentes positions de maintenance.

Le blocage axial de la cassette 91a de l'élément support extérieur 4a sur son mandrin, et le blocage axial de la cassette 91b de l'élément support extérieur 4d sur son mandrin sont assurés par des moyens de blocage spécifiques équipant lesdits mandrins. Pour les autres cassettes des éléments support, le blocage axial est avantageusement obtenu grâce à l'élément support en vis-à-vis dans la position de drapage, en particulier grâce aux mandrins en vis-à-vis desdits éléments support.

Avantageusement, l'un des éléments supports 4a ou 4d extérieurs est connecté à une source électrique, l'assemblage des éléments support les uns aux autres permet la connexion électrique des différents éléments support à ladite source, par exemple pour l'alimentation des systèmes de chauffage.

Les figures 19 et 20 illustrent une tête 101 selon une variante de réalisation, qui se différencie de la tête 1 décrite précédemment par le fait qu'elle comprend en outre des moyens de limitation pour limiter les courses relatives de deux modules fonctionnels adjacents dans la direction de compactage T2. Chaque module fonctionnel 2a, 2b comprend sur l'une de ses faces latérales un doigt 28 saillant, s'étendant dans la direction T1, et sur son autre face latérale un renfoncement s'étendant dans la direction de compactage et définissant une butée haute 29a et une butée basse 29b. Dans la position de drapage, le doigt d'un module fonctionnel se positionne entre les deux butées du renfoncement d'un module adjacent, et son renfoncement reçoit entre ses deux butées le doigt de l'autre module adjacent. Pour les deux modules fonctionnels disposés à l'extérieur, qui sont adjacents à un seul autre module fonctionnel, l'un comprend uniquement un doigt qui se positionne dans le renfoncement du module adjacent, l'autre comprend uniquement son renfoncement qui reçoit le doigt de son module adjacent. La distance entre les deux butées définit la course relative maximale entre deux modules fonctionnels adjacents.

A titre d'exemple, tel qu'illustré à la figure 20, lorsque le module fonctionnel référencé 2a est sollicité vers sa position basse pour draper une seule fibre au moyen de ce dit module fonctionnel, les modules fonctionnels disposés à sa droite sur la figure 20 sont également entrainés mécaniquement par leurs doigts en appui contre les butées hautes correspondantes, et les modules fonctionnels à sa gauche sont entrainés mécaniquement par leur butées basses en appui contre en appui contre les doigts correspondants.

Bien que l'invention ait été décrite en liaison avec un mode de réalisation particulier, il est bien évident qu'elle n'y est nullement limitée et qu'elle comprend tous les équivalents techniques des moyens décrits ainsi que leurs combinaisons si celles-ci entrent dans le cadre de l'invention, telle que définie par les revendications.

## Revendications

1. Tête d'application de fibres pour la réalisation de pièces en matériau composite par application de bandes formées de plusieurs fibres continues disposées bord à bord, comprenant un système de compactage comprenant plusieurs rouleaux de compactage indépendants (3a, 3b) et des vérins de compactage (5a, 5b), et pour chaque fibre, des moyens de coupe (23) et des moyens de réacheminement (24),
- pour chaque fibre, la tête comprend un module fonctionnel (2a, 2b) comprenant les moyens de coupe (23) et les moyens de réacheminement (24), chaque module fonctionnel est monté mobile en translation selon une direction de compactage (T2) sur un élément support (4) de la tête,
- chaque rouleau de compactage est monté sur un ou plusieurs modules fonctionnels adjacents,
- un vérin de compactage est associé au(x) module(s) fonctionnel(s) associé(s) à un rouleau de compactage pour le déplacement en translation du ou des modules fonctionnels, et
- les rouleaux de compactage sont disposés en une seule rangée, côte à côte sans contact entre eux, les axes (B1, B2) de rotation des rouleaux de compactage étant disposés selon un même plan (C) de compactage, parallèle à la direction de compactage, ladite tête comprenant au moins un premier module fonctionnel (2a) et au moins un second module fonctionnel (2b) disposés côte à côte en alternance, chaque premier module fonctionnel comprenant des moyens de guidage (26) aptes à guider une première fibre en direction d'un rouleau de compactage selon un premier plan (P1) de guidage et chaque second module fonctionnel comprenant des moyens de guidage aptes à guider une deuxième fibre en direction d'un rouleau de compactage selon un second plan (P2) de guidage, différent du premier plan (P1) de guidage, de manière à former au niveau des rouleaux de compactage une bande de fibres formée de première(s) et deuxième(s) fibres disposées en alternance bord à bord.

2. Tête d'application selon la revendication 1, **caractérisée en ce qu'**elle comprend un rouleau de compactage (3a, 3b) par module fonctionnel (2a, 2b).

3. Tête d'application selon la revendication 1 ou 2, **caractérisée en ce que** chaque premier module fonctionnel (2a) comprend des moyens de guidage (26) aptes à guider une première fibre en direction du rouleau de compactage (3a) selon un premier plan (P1) de guidage formant un premier angle (α1) non nul avec le plan (C) de compactage des axes de rotation (B1, B2) des rouleaux de compactage, chaque second module fonctionnel (2b) comprend des moyens de guidage aptes à guider une deuxième fibre en direction du rouleau de compactage (3b) selon un second plan (P2) de guidage formant un deuxième angle (α2) non nul avec le plan (C) de compactage, ledit deuxième angle étant supérieur au premier angle, lesdits plans de guidage (P1, P2) étant disposés du même côté du plan (C) de compactage.

4. Tête d'application selon la revendication 3, **caractérisée en ce qu'**elle comprend en outre des moyens de chauffage comprenant un système de chauffage (6a, 6b) indépendant associé à chaque rouleau de compactage (3a, 3b), ledit système de chauffage étant apte à se déplacer avec le ou les modules fonctionnels associés audit rouleau de compactage.

5. Tête d'application selon la revendication 4, **caractérisée en ce que** le système de chauffage (6a, 6b) est apte à émettre un rayonnement thermique (66) en direction de la zone de pincement entre le rouleau de compactage (3a, 3b) et la surface d'application, pour chauffer chaque fibre disposée sur le rouleau de compactage, avant son compactage par ce dernier, ainsi que la surface d'application et/ou une ou plusieurs fibres préalablement appliquées.

6. Tête d'application selon la revendication 4 ou 5, **caractérisée en ce que** chaque système de chauffage (6a, 6b) comprend une ou plusieurs torches à air chaud (61a, 61b), un système de chauffage de type laser, ou un système de chauffage de type lampe flash.

7. Tête d'application selon l'une des revendications 1 à 6, **caractérisée en ce qu'**elle comprend des moyens de limitation (28, 29a, 29b), aptes à limiter les courses relatives de deux modules fonctionnels adjacents dans la direction de compactage (T2).

8. Tête d'application selon la revendication 7, **caractérisée en ce que** lesdits moyens de limitation comprennent, pour chaque paire de modules adjacents associés à des rouleaux de compactage différents, un doigt (28) solidaire de l'un des deux modules fonctionnels, et positionné entre deux butées (29a, 29b) de l'autre module fonctionnel, les deux butées étant espacées l'une de l'autre dans la direction de compactage.

9. Procédé de fabrication d'une pièce en matériau composite comprenant l'application de fibres continues sur une surface d'application, tel que l'application de fibres est réalisée au moyen d'une tête d'application de fibres selon l'une des revendications 1 à 8, par déplacement relatif de la tête d'application par rapport à la surface de drapage selon des trajectoires de dépose, ledit procédé comprenant le drapage de bandes de fibres dans laquelle les fibres sont disposées sensiblement bord à bord, chaque fibre lors du drapage étant compactée partiellement par un rouleau de compactage de largeur inférieure à la largeur de la fibre.

## Patentansprüche

1. Faserapplikationskopf zur Fertigung von Teilen aus Verbundwerkstoff durch Applizieren von Bändern, die aus mehreren Endlosfasern gebildet sind, die auf Stoß angeordnet sind, umfassend ein Verdichtungssystem, das mehrere unabhängige Verdichtungswalzen (3a, 3b) und Verdichtungsspindeln (5a, 5b) umfasst, und für jede Faser Mittel zum Schneiden (23) und Mittel zum Umleiten (24),
- wobei der Kopf für jede Faser ein Funktionsmodul (2a, 2b) umfasst, welches die Mittel zum Schneiden (23), und die Mittel zum Umleiten (24) umfasst, wobei jedes Funktionsmodul in einer Verdichtungsrichtung (T2) vorschubbeweglich auf einem Trägerelement (4) des Kopfes montiert ist,
- jede Verdichtungswalze auf einem oder mehreren benachbarten Funktionsmodulen montiert ist,
- eine Verdichtungsspindel dem (den) Funktionsmodul(en) zugewiesen ist, das (die) einer Verdichtungswalze zur Vorschubbewegung des oder der Funktionsmoduls (-e) zugewiesen ist (sind), und
- die Verdichtungswalzen in einer einzigen Reihe, Seite an Seite ohne Kontakt zueinander angeordnet sind, wobei die Drehachsen (B 1, B2) der Verdichtungswalzen entlang einer selben Verdichtungsebene (C), parallel zur Verdichtungsrichtung angeordnet sind,
wobei der Kopf mindestens ein erstes Funktionsmodul (2a) und mindestens ein zweites Funktionsmodul (2b) umfasst, die abwechselnd Seite an Seite angeordnet sind, wobei jedes erste Funktionsmodul Führungsmittel (26) umfasst, die imstande sind, eine erste Faser in Richtung einer Verdichtungswalze entlang einer ersten Führungsebene (P1) zu führen, und jedes zweite Funktionsmodul Führungsmittel umfasst, die imstande sind, eine zweite Faser in Richtung einer Verdichtungswalze entlang einer zweiten Führungsebene (P2) zu führen, die sich von der ersten Führungsebene (P1) unterscheidet, um im Bereich der Verdichtungswalzen ein Band aus Fasern zu bilden, das aus (einer) ersten und zweiten Faser(n) gebildet wird, die abwechselnd auf Stoß angeordnet sind.

2. Applikationskopf nach Anspruch 1, **dadurch gekennzeichnet, dass** er eine Verdichtungswalze (3a, 3b) je Funktionsmodul (2a, 2b) umfasst.

3. Applikationskopf nach Anspruch 1 oder 2, **dadurch gekennzeichnet, dass** jedes erste Funktionsmodul (2a) Führungsmittel (26) umfasst, die imstande sind, eine erste Faser in Richtung der Verdichtungswalze (3a) entlang einer ersten Führungsebene (P1) zu führen, die einen ersten Winkel (α1) ungleich null mit der Verdichtungsebene (C) der Drehachsen (B1, B2) der Verdichtungswalzen bildet, jedes zweite Funktionsmodul (2b) Führungsmittel umfasst, die imstande sind, eine zweite Faser in Richtung der Verdichtungswalze (3b) entlang einer zweiten Führungsebene (P2) zu führen, die einen zweiten Winkel (α2) ungleich null mit der Verdichtungsebene (C) bildet, wobei der zweite Winkel größer als der erste Winkel ist, wobei die Führungsebenen (P1, P2) auf derselben Seite wie die Verdichtungsebene (C) angeordnet sind.

4. Applikationskopf nach Anspruch 3, **dadurch gekennzeichnet, dass** er weiter Mittel zum Erhitzen umfasst, die ein unabhängiges Heizsystem (6a, 6b) umfassen, welches jeder Verdichtungswalze (3a, 3b) zugewiesen ist, wobei das Heizsystem imstande ist, sich mit dem oder den Funktionsmodul(en), das (die) der Verdichtungswalze zugeordnet ist (sind), zu bewegen.

5. Applikationskopf nach Anspruch 4, **dadurch gekennzeichnet, dass** das Heizsystem (6a, 6b) imstande ist, eine Wärmestrahlung (66) in Richtung des Klemmbereichs zwischen der Verdichtungswalze (3a, 3b) und der Applikationsoberfläche auszugeben, um jede Faser, die auf der Verdichtungswalze angeordnet ist, vor deren Verdichtung durch letztere, sowie die Applikationsoberfläche und/oder eine oder mehrere zuvor applizierte Fasern zu erhitzen.

6. Applikationskopf nach Anspruch 4 oder 5, **dadurch gekennzeichnet, dass** jedes Heizsystem (6a, 6b) einen oder mehrere Heißluftbrenner (61a, 61b), ein Heizsystem in der Art eines Lasers, oder ein Heizsystem in der Art einer Blitzlampe umfasst.

7. Applikationskopf nach einem der Ansprüche 1 bis 6, **dadurch gekennzeichnet, dass** er Begrenzungsmittel (28, 29a, 29b) umfasst, die imstande sind, die Wege zweier benachbarter Funktionsmodule zueinander in der Verdichtungsrichtung (T2) zu begrenzen.

8. Applikationskopf nach Anspruch 7, **dadurch gekennzeichnet, dass** die Begrenzungsmittel für jedes Paar an benachbarten Modulen, die unterschiedlichen Verdichtungswalzen zugeordnet sind, einen Finger (28) umfassen, der fest mit dem einen der beiden Funktionsmodule verbunden ist, und zwischen zwei Anschlägen (29a, 29b) des anderen Funktionsmoduls positioniert ist, wobei die beiden Anschläge in der Verdichtungsrichtung voneinander beabstandet sind.

9. Verfahren zur Herstellung eines Teils aus Verbundwerkstoff, umfassend die Applikation Endlosfasern auf einer Applikationsoberfläche, sodass die Applikation von Fasern anhand eines Faserapplikationskopfes nach einem der Ansprüche 1 bis 8, durch eine relative Verschiebung des Applikationskopfes in Bezug auf die Drapier-Oberfläche entlang von Abscheidebahnen erfolgt, wobei das Verfahren das Drapieren von Bändern aus Fasern umfasst, wobei die Fasern im Wesentlichen auf Stoß angeordnet sind, wobei jede Faser beim Drapieren teilweise durch eine Verdichtungswalze mit einer Breite verdichtet wird, die geringer als die Breite der Faser ist.

## Claims

1. Fiber application head for the production of composite material parts by application of bands formed of several continuous fibers arranged edge to edge, comprising a compaction system comprising several independent compaction rollers (3a, 3b) and compaction cylinders (5a, 5b), and for each fiber, cutting means (23) and rerouting means (24),
- for each fiber, the head comprises a functional module (2a, 2b) including the cutting means (23) and the rerouting means (24), each functional module is mounted so as to be movable in translation along a compaction direction (T2) on a support element (4) of the head,
- each compaction roller is mounted on one or more adjacent functional modules,
- a compaction cylinder is associated with the functional module(s) associated with a compaction roller for the displacement in translation of the functional module(s), and
- the compaction rollers are arranged in a single row, side by side without contact with each other, the rotation axis (B1, B2) of the compaction rollers being arranged in the same compaction plane (C), parallel to the compaction direction,
- said head comprising at least one first functional module (2a) and at least one second functional module (2b) arranged alternately side by side, each first functional module comprising guiding means (26) able to guide a first fiber towards a compaction roller along a first guiding plane (P1) and each second functional module comprising guiding means able to guide a second fiber towards a compaction roller along a second guiding plane (P2), different from the first guiding plane (P1), so as to form at the level of the compaction rollers a fiber band formed by first and second fibers arranged alternately edge to edge.

2. Application head according to claim 1, **characterized in that** it comprises one compaction roller (3a, 3b) per functional module (2a, 2b).

3. Application head according to claim 1 or 2, **characterized in that** each first functional module (2a) comprises guiding means (26) able to guide a first fiber towards the compaction roller (3a) along a first guiding plane (P1) forming a first non-zero angle (α1) with the compaction plane (C) of the rotation axis (B1, B2) of the compaction rollers, each second functional module (2b) comprises guiding means able to guide a second fiber towards the compaction roller (3b) along a second guiding plane (P2) forming a second non-zero angle (α2) with the compaction plane (C), said second angle being greater than the first angle, said guiding planes (P1, P2) being arranged on the same side of the compaction plane (C).

4. The application head according to claim 3, **characterized in that** it further comprises heating means comprising an independent heating system (6a, 6b) associated with each compaction roller (3a, 3b), said heating system being able to displace together with the functional module(s) associated with said compaction roller.

5. Application head according to claim 4, **characterized in that** the heating system (6a, 6b) is able to emit thermal radiation (66) towards the nip area between the compaction roller (3a, 3b) and the application surface, in order to heat each fiber located on the compaction roller, before its compaction by the latter, as well as the application surface and/or one or more previously applied fibers.

6. Application head according to claim 4 or 5, **characterized in that** each heating system (6a, 6b) comprises one or more hot air torches (61a, 61b), a laser type heating system, or a flash lamp type heating system.

7. Application head according to one of claims 1 to 6, **characterized in that** it comprises limiting means (28, 29a, 29b) able to limit the relative strokes of two adjacent functional modules in the compaction direction (T2).

8. Application head according to claim 7, **characterized in that** said limiting means comprise, for each pair of adjacent modules associated with different compaction rollers, a finger (28) attached to one of the two functional modules and positioned between two stops (29a, 29b) of the other functional module, the two stops being spaced apart in the compaction direction.

9. Method for the manufacture of a composite material part comprising the application of continuous fibers onto an application surface, such that the application of fibers is carried out by means of a fiber application head according to one of claims 1 to 8, by relative displacement of the application head with respect to the lay-up surface along lay-up trajectories, said method comprising the lay-up of fiber bands in which the fibers are arranged substantially edge to edge, each fiber during lay-up being partially compacted by a compaction roller having a width smaller than the width of the fiber.
